# EUROPEAN PATENT APPLICATION

(11) **EP 3 889 851 A1**
(43) Date of publication of application: **06.10.2021**
(21) Application number: 20167649.1
(22) Date of filing: 02.04.2020
(51) Int. Cl.: G06N 20/20, G06N 5/04, G06F 16/332, B60R 16/037

(54) **SYSTEM, METHOD AND COMPUTER PROGRAM FOR VERIFYING LEARNED PATTERNS USING ASSIS-TIVE MACHINE LEARNING**

(71) Applicant: Bayerische Motoren Werke Aktiengesellschaft, 80809 München (DE)
(72) Inventor: Chin, Alvin, Chicago, IL Illinois 60601 (US); Tian, Jilei, Chicago, IL Illinois 60601 (US)

(57) **Abstract**

Examples relate to a system, a method and a computer program for verifying patterns learned from data, and to a vehicle comprising such a system using assistive machine learning. The system comprises one or more processors and one or more storage devices. The system is configured to obtain information on one or more patterns being generated by one or more machine learning models. Each of the one or more patterns comprises one or more data items and information about a confidence level of the pattern. The system is configured to determine a context that a user of the vehicle is in in relation to the vehicle. The context is determined based on one or more context indicators. The one or more context indicators comprise at least one of a current time and a location of the user or vehicle. The system is configured to select at least one of the one or more data items of one of the one or more patterns based on the confidence level of the pattern and based on the context of the user. The system is configured to provide information on the at least one data item to the user via a user interface. The information on the at least one data item requests the user to provide feedback on the at least one data item. The system is configured to adjust the at least one data item or the confidence level of the pattern based on the response of the user, by processing the response of the user via the user interface using natural language processing.

## Description

### Field

Examples relate to a system, a method and a computer program for verifying patterns learned from data using user feedback and assistive machine learning, and to a vehicle comprising such a system.

### Background

Machine learning algorithms are being used to learn a driver's behavior and profile, e.g. to identify a driver's home and/or to predict a time and location of their next trip. However, especially in the early stages of the learning process, the confidence level of the learned patterns may be low, e.g. because of a smaller training data size, data sparsity, naturally ambiguous information, therefore they are too low to use the patterns for suggestions for the user. Due to concerns related to user experience, there may be a desire for a good confidence that the learned pattern is correct, but it often takes some time before suggestions show up for a user, e.g. longer time than what the user had expected. In addition, some of the detailed information may be only available from the user, e.g. a user check-in location for a given vehicle parking location. Learning quality is of great importance toward the user experience, particularly in the feature automation.

There are various approaches for providing feedback to machine learning. For example, US 7,958,066 B2 provides an interactive machine learning advice facility, which intends to help a user make a decision through the use of a machine learning facility, where the user starts with a question, then a dialogue of questions are provided to the user from the machine learning facility, from which the user provides answers. Then the machine learning facility provides a decision to the user that addresses the initial question. US 9,384,450 B1 relates to training machine learning models for open-domain question answering system, in which ground truth question and answer pairs are generated from users and scored for training a machine learning model to provide the top-scoring candidate answers. Furthermore, there are various concepts for personal assistants, e.g. as shown in US20140136187A1, US 2003/0167167 A1, WO 2019 214799 A1, "A Joint Model for Question Answering and Question Generation" (Wang et al., 2017).

### Summary

There is a desire for an improved concept for increasing a confidence level of the learned patterns with a reduced cognitive load for a user of the vehicle.

This desire is addressed by the subject-matter of the independent claims.

Embodiments are based on the finding, that, while machine learning can be used to identify patterns in the behavior of a user of a vehicle, the reliability of the predicted patterns, and thus the confidence level of the predicted patterns, is generally low at the beginning of the learning process. Over time, the confidence level may increase, but this may lead to delays until the patterns are reliable enough to be used. One way of increasing the confidence level of the predicted patterns is to ask the respective user about whether the pattern is correctly predicted. However, this may annoy or bewilder the user. To avoid such annoyances, embodiments of the present disclosure use several mechanisms: For once, the context that a user of the vehicle is in in relation to the vehicle is determined, and verification of a pattern is performed if the pattern is relevant to the context. Additionally, natural language processing is used to enable a natural exchange between vehicle and user, e.g. via a voice-based user interface. Furthermore, the pattern to be verified is selected based on its confidence level of the prediction, e.g. to tackle patterns with a low confidence level, for which the verification provides the largest benefit.

Embodiments of the present disclosure thus provide a system for verifying patterns learned from data and generated by one or more machine learning models being used in a vehicle. The system comprises one or more processors and one or more storage devices. The system is configured to obtain information on one or more patterns being generated by the one or more machine learning models. Each of the one or more patterns comprises one or more data items and information about a confidence level of the pattern. The system is configured to determine a context that a user of the vehicle is in in relation to the vehicle. The context is determined based on one or more context indicators. The one or more context indicators comprise at least one of a current time and a location of the user or vehicle. The system is configured to select at least one of the one or more data items of one of the one or more patterns based on the confidence level of the pattern and based on the context of the user. The system is configured to provide information on the at least one data item to the user via a user interface. The information on the at least one data item requests the user to provide feedback on the at least one data item. The system is configured to adjust the at least one data item or the confidence level of the pattern based on the response of the user, by processing the response of the user via the user interface using natural language processing. Thus, an improved concept for increasing a confidence level of the learned patterns is provided, while avoiding annoying the user of the vehicle.

In various embodiments, the system is configured to trigger providing the information on the at least one data item to the user based on the determined context. Thus, the feedback can be obtained when the user is likely already mentally attuned to the verification being performed.

The one or more patterns of the one or more machine learning models may relate to usage patterns of the vehicle by the user. In other words, the learned patterns may relate to a usage of the vehicle by the user, e.g. a home location and/or a work location of the user, frequently driven routes, preferred heating/air conditioning etc. For example, the one or more data items relate to one of more of a designation of a location, a starting location of a trip, a destination of a trip, a regularity of a trip, a setting of the vehicle, a temperature control setting of the vehicle, and an air conditioning setting of the vehicle. These are data items of usage patterns of the vehicle by the user.

In various embodiments, the system is configured to generate the one or more patterns using the one or more machine learning models, and to re-train the one or more machine learning models based on the adjusted at least one data item or the confidence level of the pattern. In other words, the machine learning models that are used to generate the one or more patterns may be adjusted based on the verification, so that they subsequently either generate the same pattern (if it was correct), or another pattern (based on a correction provided by the user).

In various embodiments, the one or more context indicators comprise at least one of a current time, a location of the user or vehicle, a velocity of the vehicle, a map of an environment of the vehicle, and the weather. Various context indicators may be used to model the context of the user.

In the following, some common types of patterns are shown. For example, the selected pattern may relate to a location. The system may be configured to ask the user about the designation of the location, by providing information on a predicted designation of the location or by asking the user to provide the designation of the location. Thus, the response of the user may be used to either confirm the predicted designation, or to obtain the correct designation.

In some cases, the selected pattern relates to a trip. The system may be configured to ask the user to confirm or provide a starting location and/or a destination of the trip, and/or to indicate whether the trip is a regular trip. Thus, the response of the user may be used to either confirm or obtain the starting location or destination of the user, and/or to confirm the regularity of the trip.

In some cases, the selected pattern relates to a setting of the vehicle. The system may be configured to ask the user whether the predicted setting is appropriate in the determined context. Thus, the response of the user may be used to confirm whether the predicted setting is appropriate in the determined context.

In various embodiments, the user interface is a voice-based user interface. For example, the system may be configured to use a user interaction template to provide the information on the at least one data item to the user. The user interaction template may be based on a type of the at least one data item. User interaction templates may be used as a computationally straight-forward way of obtaining feedback on the selected pattern.

In various embodiments, the system is configured to select the at least one data item such, that patterns having a lower (e.g. the lowest) confidence level are preferred over patterns having a higher confidence level. By obtaining feedback on patterns having a lower confidence level, a higher relative improvement of the pattern prediction can be obtained.

In general, the information on the at least one data item may comprise one or more of a textual representation of the at least one data item and a question related to the at least one data item. In other words, the data item may be presented to the user, and the user may be asked to verify the data item, or the user may be asked to provide the correct version of the data item.

Embodiments of the present disclosure further provide a vehicle comprising the system. Thus, the system can be used to improve the confidence level of the learned patterns while the user is within the vehicle.

Embodiments of the present disclosure further provide a corresponding method for verifying patterns learned from data and generated by one or more machine learning models being used in a vehicle. The method comprises obtaining information on one or more patterns being generated by the one or more machine learning models. Each of the one or more patterns comprise one or more data items and information about a confidence level of the pattern. The method comprises determining a context that a user of the vehicle is in in relation to the vehicle. The context is determined based on one or more context indicators comprising at least one of a current time and a location of the user or vehicle. The method comprises selecting at least one of the one or more data items of one of the one or more patterns based on the confidence level of the pattern and based on the context of the user. The method comprises providing information on the at least one data item to the user via a user interface. The information on the at least one data item requests the user to provide feedback on the at least one data item. The method comprises adjusting the at least one data item or the confidence level of the pattern based on the response of the user, by processing the response of the user via the user interface using natural language processing.

Embodiments of the present disclosure further provide a computer program product comprising a computer readable medium having computer readable program code embodied therein. The computer readable program code is configured to implement the above method, when being loaded on a computer, a processor, or a programmable hardware component.

### Brief description of the Figures

Some examples of apparatuses and/or methods will be described in the following by way of example only, and with reference to the accompanying figures, in which
- Fig. 1a: shows a schematic diagram of an example of system for verifying patterns learned from data and of a vehicle comprising such a system;
- Fig. 1b: shows a schematic diagram of an example of a method for verifying patterns learned from data;
- Fig. 2: shows a schematic diagram of a high-level flow of an example of the proposed approach; and
- Fig. 3: shows a table of a mapping between a user-learned profile and a Question & Answer template.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

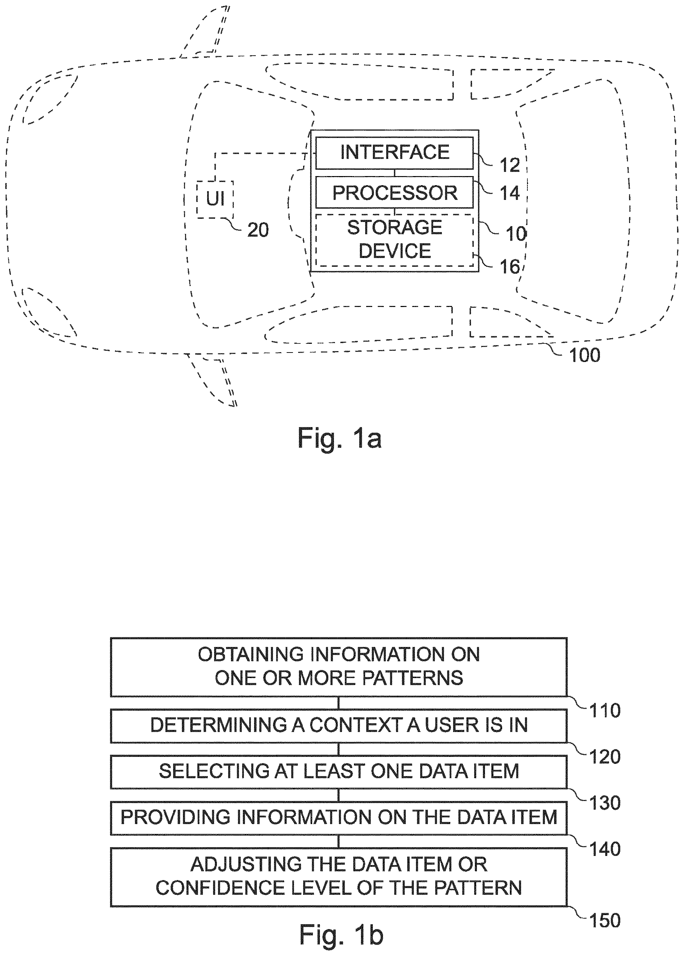

Fig. 1a shows a schematic diagram of an example of system 10 for verifying patterns learned from data and generated by one or more machine learning models being used in a vehicle 100. Fig. 1a further shows the vehicle 100 comprising the system 10. The system comprises one or more processors 14 and one or more storage devices 16. Optionally, the system further comprises an interface 12. The one or more processors 14 are coupled to the optional interface 12 and to the one or more storage devices 16. In general, the functionality of the system 10 is provided by the one or more processors 14, e.g. in conjunction with the interface 12 and/or the one or more storage devices 16. For example, the system may be a computer-implemented system.

The system is configured to obtain information on one or more patterns being generated by the one or more machine learning models (e.g. from the one or more storage devices 16 and/or via the interface 12). Each of the one or more patterns comprises one or more data items and information about a confidence level of the pattern. The system is configured to determine a context that a user of the vehicle is in in relation to the vehicle, based on one or more context indicators. The one or more context indicators comprises at least one of a current time and a location of the user or vehicle. The system is configured to select at least one of the one or more data items of one of the one or more patterns based on the confidence level of the pattern and based on the context of the user. The system is configured to provide information on the at least one data item to the user via a user interface 20. For example, the vehicle 100 may further comprise the user interface 20. The information on the at least one data item requests the user to provide feedback on the at least one data item. The system is configured to adjust the at least one data item or the confidence level of the pattern based on the response of the user, by processing the response of the user via the user interface using natural language processing.

Fig. 1b shows a schematic diagram of an example of a method for verifying patterns learned from data and generated by one or more machine learning models being used in a vehicle. The method may be a computer-implemented method. The method comprises obtaining 110 information on one or more patterns being generated by the one or more machine learning models. Each of the one or more patterns comprise one or more data items and information about a confidence level of the pattern. The method comprises determining 120 a context that a user of the vehicle is in in relation to the vehicle, based on one or more context indicators comprising at least one of a current time and a location of the user or vehicle. The method comprises selecting 130 at least one of the one or more data items of one of the one or more patterns based on the confidence level of the pattern and based on the context of the user. The method comprises providing 140 information on the at least one data item to the user via a user interface. The information on the at least one data item requests the user to provide feedback on the at least one data item. The method comprises adjusting 150 the at least one data item or the confidence level of the pattern based on the response of the user, by processing the response of the user via the user interface using natural language processing.

The following description relates both to the system of Fig. 1a and to the method of Fig. 1b. Features described in connection with the system of Fig. 1a may likewise be applied to the method of Fig. 1b.

Embodiments of the present disclosure relate to a system, a method and computer program for verifying patterns learned from data and generated by one or more machine learning models being used in a vehicle 100. In general, as has been introduced before, vehicle manufacturers aim to improve the user experience in their vehicles by adding predictive features and intelligent personal assistants to their vehicles. For these prediction schemes and personal assistants to provide meaningful assistance, machine learning is used to identify patterns in the usage of the vehicle by the user. In other words, the one or more machine learning models may be used to identify the one or more patterns of the user of the vehicle. Accordingly, the system may be configured to generate the one or more patterns using the one or more machine learning models. Alternatively, the one or more patterns may be generated by another system, e.g. another system of the vehicle or a remote entity, such as a cloud computing server or a mobile device of the user. In both cases, the system is configured to obtain the information on one or more patterns being generated by the one or more machine learning models, e.g. from the one or more storage devices, if the information on the one or more patterns has been stored there after generating the one or more patterns with the one or more machine learning models, or after the information on the one or more patterns has been obtained from the other system or from the remote entity. Alternatively, the information on the one or more patterns may be received (directly) from the other system or from the other entity.

In general, the one or more patterns relate to a usage of the vehicle, i.e. a usage of the vehicle by the user. In other words, the one or more patterns of the one or more machine learning models relate to usage patterns of the vehicle by the user. Accordingly, the one or more patterns may be user-specific, i.e. specific to a single user of the vehicle. Accordingly, each user of the vehicle may be associated with their own set of one or more patterns.

While the one or more patterns, as well as the context of the user, is presented in relation to the vehicle, the concept may also be applied to other contexts. For example, in a more general manner, the one or more machine learning models may be used in a device. The context of the user may be in relation to the device. Accordingly, the one or more context indicators may comprise the at least one of a current time and a location of the user or device. Also, the device may comprise the user interface 20.
Each of the one or more patterns comprises one or more data items and information about a confidence level of the pattern. In general, the one or more data items of the pattern relate to the "actual" pattern that is being generated (i.e. predicted). The one or more data items depend on the type of the predicted pattern, with each type of pattern being based on the one or more patterns. To give an example: One exemplary type of pattern is the type "predicted trip". The "predicted trip" pattern type comprises three data items, a starting location of the predicted trip, a destination of the predicted trip and a time of the predicted trip. Optionally, the trip may also have a data item indicating a regularity of the trip (e.g. yes or no). The same type of pattern has the same kinds of data items (e.g. the type "predicted trip" may always comprise the above-mentioned data items), but the data items themselves may be variable. In other words, the one or more data items may constitute the variable parts of the pattern, and a type of the pattern may specify which kinds/types of data items the pattern comprises.

For example, the one or more pattern, with the one or more data items, may be stored within a profile of the user, e.g. within the one or more storage devices.

For example, several types of patterns may be used. For example, the one or more patterns may relate to one or more types of patterns of the group of a (predicted) trip, a location (e.g. a home location, work location, leisure activity location etc.), or a vehicle setting. The one or more data items may relate to one of more of a designation of a location, a starting location of a trip, a destination of a trip, a regularity of a trip, a time of a trip, a setting of the vehicle, a temperature control setting of the vehicle, and an air conditioning setting of the vehicle. Accordingly, the pattern type "location" may comprise the data item "designation of the location" (with the pattern type being based on the coordinates of the location). For example, the designation of the location may relate to the designation of the location, as used by the user (in contrast to its address or coordinates), such as "home", "work", "gym", "partner", "mall", "grocery store" etc. The pattern type "(predicted) trip" may comprise the data items "starting location of the trip", "destination of the trip", "regularity of a trip" (indicating whether the trip is a regular trip) and/or a time of the trip (e.g. the regular starting time of the trip). For example, the user might take a regular trip (regularity=yes) from home (starting location) to work (destination) each workday at 8 am (time of the trip, regularity of the trip). The pattern type "vehicle setting" may comprise the data item "setting of the vehicle" and another data item "condition in which the setting of the vehicle is applied". For example, the setting of the vehicle may relate to a temperature control setting or air conditioning setting of the vehicle, and the condition in which the setting of the vehicle is applied may relate to the external temperature. Alternatively, the setting of the vehicle may relate to a lighting setting of the vehicle (lights on or off in daylight) or to an entertainment setting of the vehicle (e.g. a radio station or podcast), and the condition in which the setting of the vehicle is applied may relate to the current time. In general, the data items relate to personalized settings or features that are learned based on trips, driver behavior, and vehicle settings, that form a learned implicit driver profile. Accordingly, other types of patterns and/or other kinds/types of data items are also feasible.

The system is configured to determine the context that a user of the vehicle is in in relation to the vehicle. In other words, the context may be based on a current (e.g. driving a potentially regular trip) or future activity (e.g. about to head out on a potentially regular trip) of the user in relation to the vehicle, or to a current or future location of the user in the vehicle (e.g. approaching a location that is predicted to be the home or work location). For example, the context may relate to the mental state of the user in relation to the vehicle (e.g. in anticipation of a trip, on a trip heading from a starting location to a destination, at a certain regular location). The context is determined based on (e.g. derived from) the one or more context indicators. In general, the one or more context indicators may comprise at least one of a current time and a location of the user or vehicle. Other feasible context indicators are the velocity of the vehicle, a map of the environment of the vehicle or the weather. In other words, the one or more context indicators may comprise at least one of a current time, a location of the user or vehicle, a velocity of the vehicle, a map of an environment of the vehicle, and the weather. In some embodiments, the one or more context indicators may comprise at least one of the current time and the location of the user, and zero or more (e.g. one or more) of the velocity of the vehicle, the map of the environment of the vehicle and the weather. For example, "traveling" is the context that can be inferred from the distance to the "home" location. "Speeding" is another example of context that combines current speed and speed limit from the map. Based on the context, the system can initiate the relevant action interacting with users who can have natural and intuitive experience. Accordingly, the context of the user in relation to the vehicle is used to select one of the one or more patterns that is relevant in the current context of the user.

The system is configured to select at least one of the one or more data items of one of the one or more patterns based on the confidence level of the pattern and based on the context of the user. In general, the system may be configured to select a pattern of the one or more pattern, based on the confidence level of the pattern and based on the context of the user.

For example, the system may be configured to select a pattern that is suitable for the context of the user.

If there are multiple patterns that are suitable for the context, one of them may be chosen according to its confidence level. For example, the one or more patterns (which may be a plurality of patterns) may comprise two or more patterns that are suitable for the context of the user. In this case, one of the patterns that are suitable for the context of the user may be selected. In this case, the pattern may be selected according to the confidence level. For example, the system may be configured to select the at least one data item (and thus the pattern) such, that patterns having a lower confidence level are preferred over patterns having a higher confidence level. In general, the system may prefer to select the patterns/data items having the lowest confidence to maximize the gain from learning perspective, for a given context to maximize the relevancy from user experience perspective. To provide an improved user experience where the learned entities are accurate, the system may recognize and select patterns with lower confidence level so that high uncertainty does not get exposed to the user, resulting in a poor user experience. Therefore, the system may prompt the user to provide feedback to confirm or correct the learned entity in order to assist the machine learning process. Once feedback is obtained on the selected pattern, the system may be configured to proceed with the next pattern of the two or more patterns suitable for the context.

If only a single pattern or no patterns are suitable for the context of the user, the pattern may be selected regardless of the confidence level of the pattern. For example, if only a single pattern of the one or more patterns is suitable for the context of the user, this pattern may be selected. If no pattern of the one or more patterns is suitable for the context of the user, no pattern might be selected.

Once the pattern is selected, the system may be configured to select the at least one data item. In some cases/embodiments, all of the data items of the selected pattern may be selected. Alternatively, the at least one data item of the pattern may be selected based on the context. For example, coming back to the pattern type "predicted trip", while the starting location and the destination of the predicted trip may be known, the data item that is still unclear is the regularity of the trip. For example, it may be coincidence that the user has taken a trip three days in a row (e.g. to visit someone in the hospital), but the user would not consider the trip to be a regular trip. Accordingly, the at least one data item may (only) relate to the regularity of the trip. In some other cases, the regularity of the trip may be established, but the designation of the starting location and/or of the destination may be unknown (e.g. only coordinates or the address may be known).

The system is configured to provide information on the at least one data item to the user via a user interface 20. For example, different types of user interfaces may be used. For example, the user interface may be a voice-based user interface. The information on the at least one data item may be spoken (e.g. via a text synthesis sub-system) to the user. Alternatively or additionally, the information on the at least one data item may be shown to the user via a display 20 of the vehicle. In this case, the user interface may be a multi-modal interface, comprising a display for showing the information of the at least one data item to the user, and a microphone for obtaining a spoken response of the user.

In general, the information on the at least one data item requests the user to provide feedback on the at least one data item. For example, the information on the at least one data item may comprise one or more of a textual representation of the at least one data item and a question related to the at least one data item. As the information on the at least one data item requests to provide the user to provide information on the at least one item, the user may be requested to confirm or correct the at least one data item if the textual representation of the at least one data item is provided with the information on the at least one data item. The question related to the at least one data item may request the user to confirm or correct the at least one data item (if the textual representation of the at least one data item is provided), or to provide the at least one data item. For example, if the pattern relates to a designation of a location, the question related to the at least one data item may ask the user to confirm a predicted designation of the location (e.g. "is this your home/office location?"). Alternatively, the question related to the at least one data item may ask the user to provide the designation of the location (e.g. "how do you call the location you are currently at?").

In general, the information on the at least one data item may be provided using natural language (e.g. using spoken or written sentences), either via the display or via the voice-based user interface. In some embodiments, the sentences may be generated ad libitum based on the type of the pattern and based on the at least one data item. In some embodiments, however, a template system may be employed to provide the information on the at least one data item. In other words, the system may be configured to use a user interaction template to provide the information on the at least one data item to the user. The user interaction template may be based on a type of the at least one data item (and/or of the pattern comprising the at least one data item). For example, the user interaction template may specify the natural language to use to provide the information on the at least one data item. For example, for each type of pattern/data item, the user interaction template may comprise a pre-defined sequence of sentences to provide to the user. The pre-defined sequence of sentences may comprise the textual representation of the at least one data item and/or the question related to the at least one data item. If multiple data items are being presented, multiple questions may be asked, or multiple data items may be covered in a single question. The user interaction template may be associated with the type of the pattern and/or with the type of the at least one data item. The system may be configured to select the user interaction template based on the type of the pattern and/or with the type of the at least one data item.

In some other systems, the provision of feedback on the learned pattern may be usertriggered, i.e. the user may correct the personal assistant, or run through a series of questions relating to the previously learned patterns. In embodiments, however, the feedback process may be triggered based on the determined context. In other words, the system may be configured to trigger providing the information on the at least one data item to the user based on the determined context. In other words, the system may be configured to determine the context, upon determination of the context select the at least one data item and, upon selection of the at least one data item, provide the information on the at least one data item to the user. In other words, the provision of the information on the at least one data item may be triggered by the context of the user.

The system is configured to adjust the at least one data item or the confidence level of the pattern based on the response of the user, by processing the response of the user via the user interface using natural language processing. Accordingly, the system is configured to obtain the response of the user via the user interface. As has been laid out before, the response of the user is processed using natural language processing. Accordingly, the system may be configured to obtain the response of the user via a microphone (or via any other means suitable for obtaining natural language from the user, such as a typing- or handwriting-based system). The system is configured to process the response of the user using natural language processing. In general, natural language processing (NLP) is a machine learning-based technique to process natural language provided by a user (i.e. the user) in order to extract the content of the processed natural language in a structured form. For example, natural language processing may be used to extract the subjects, objects, adjectives, adverbs, verbs etc. from a sentence, and to determine the interrelationships between the subjects, objects, adjectives, adverbs and verbs. In embodiments, natural language processing is used to process the response of the user, e.g. in order to extract the feedback on the at least one data item from the response of the user. For example, the information on the at least one data item may comprise a question on the at least one data item, such as "how would you call the current location", and the response may be "this is my home". Natural language processing may be used to extract the designation of the current location ("home") from the response. If the pattern relates to a trip, the question may be "are you going from home to work", and the answer might be "yes" (confirming both the starting location and the destination), "no" (contradicting the starting location and/or the destination), or "(no,) I'm going to the mall". In the latter case, the designation of the destination may be changed to "mall", and the designation of the starting location may be confirmed (or at least not denied).

In the following, some examples are given that relate to the pattern types that have been introduced above. For example, the selected pattern may relate to a location. In this case, the system may be configured to ask the user about the designation of the location, by providing information on a predicted designation of the location (e.g. "is this your home location") or by asking the user to provide the designation of the location (e.g. "how would you call this location"). For example, the selected pattern may relate to a trip. The system may be configured to ask the user to confirm or provide a starting location and/or a destination of the trip (e.g. "are you driving home from work?", or "how would you call your starting location and destination?"), and/or to indicate whether the trip is a regular trip (e.g. "do you usually take this trip around this time?"). For example, the selected pattern relates to a setting of the vehicle. In this case, the system may be configured to ask the user whether the predicted setting is appropriate in the determined context (e.g. "It's 80 degrees Fahrenheit outside. Do you prefer to have the air conditioning on in this weather?).

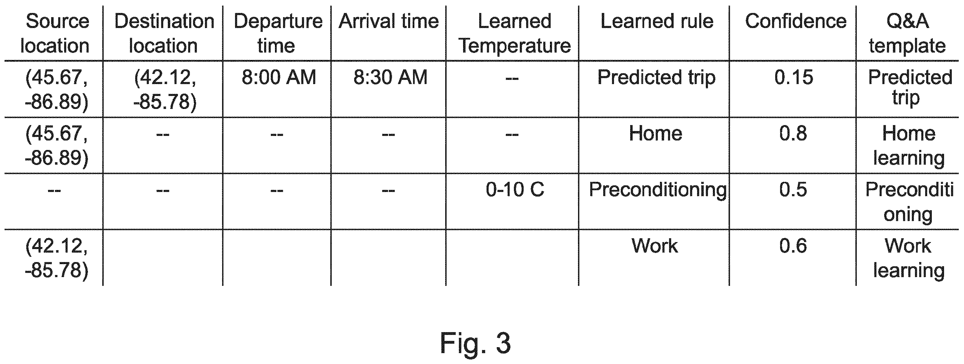

As has been introduced before, the system is configured to adjust the at least one data item or the confidence level of the pattern based on the response of the user. For example, if the response of the user confirms the at least one data item, the system may be configured to retain the at least one data item and increase the confidence level of the pattern (e.g. to the maximal value). If the response of the user contradicts the at least one data item, the system may be configured to adjust (e.g. lower) the confidence level of the pattern, or to delete the pattern. If the response of the user comprises a corrected version of the at least one data item, the system may be configured to replace the at least one data item and to increase the confidence of the at least one data item (as it has been specified by the user). The respective information may be stored using the one or more storage devices, e.g. within a database (as shown in Fig. 3).

Once the at least one data item or the confidence level of the pattern is adjusted, the one or more machine learning models may be re-trained based on the adjusted at least one data item or the confidence level of the pattern. In other words, the system may be configured to re-train the one or more machine learning models based on the adjusted at least one data item or the confidence level of the pattern. In general, the specifics of the training of the machine learning model may be out of the purview of the present disclosure. In the following, a general approach for training a machine learning model is introduced that may be used to train and/or re-train the one or more machine learning models. Further information may be found e.g. in WO 2019 214799 A1.

In general, machine learning refers to algorithms and statistical models that computer systems may use to perform a specific task without using explicit instructions, instead relying on models and inference. For example, in machine learning, instead of a rule-based transformation of data, a transformation of data may be used, that is inferred from an analysis of historical and/or training data. For example, the content of images may be analyzed using a machine learning model or using a machine learning algorithm. In order for the machine learning model to analyze the content of an image, the machine learning model may be trained using training images as input and training content information as output. By training the machine learning model with a large number of training images and associated training content information, the machine learning model "learns" to recognize the content of the images, so the content of images that are not included of the training images can be recognized using the machine learning model. The same principle may be used for other kinds of sensor data as well. By training a machine learning model using training sensor data and a desired output, the machine learning model "learns" a transformation between the sensor data and the output, which can be used to provide an output based on non-training sensor data provided to the machine learning model.

Machine learning models are trained using training input data. The examples specified above use a training method called "supervised learning". In supervised learning, the machine learning model is trained using a plurality of training samples, wherein each sample may comprise a plurality of input data values, and a plurality of desired output values, i.e. each training sample is associated with a desired output value. By specifying both training samples and desired output values, the machine learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g. a classification algorithm, a regression algorithm or a similarity learning algorithm. Classification algorithms may be used when the outputs are restricted to a limited set of values, i.e. the input is classified to one of the limited set of values. Regression algorithms may be used when the outputs may have any numerical value (within a range). Similarity learning algorithms are similar to both classification and regression algorithms, but are based on learning from examples using a similarity function that measures how similar or related two objects are.

Apart from supervised or semi-supervised learning, unsupervised learning may be used to train the machine learning model. In unsupervised learning, (only) input data might be supplied, and an unsupervised learning algorithm may be used to find structure in the input data, e.g. by grouping or clustering the input data, finding commonalities in the data. Clustering is the assignment of input data comprising a plurality of input values into subsets (clusters) so that input values within the same cluster are similar according to one or more (pre-defined) similarity criteria, while being dissimilar to input values that are included in other clusters. For example, unsupervised learning may be used to train the one or more machine learning models to identify the learned patterns.

Machine learning algorithms are usually based on a machine learning model. In other words, the term "machine learning algorithm" may denote a set of instructions that may be used to create, train or use a machine learning model. The term "machine learning model" may denote a data structure and/or set of rules that represents the learned knowledge, e.g. based on the training performed by the machine learning algorithm. In embodiments, the usage of a machine learning algorithm may imply the usage of an underlying machine learning model (or of a plurality of underlying machine learning models). The usage of a machine learning model may imply that the machine learning model and/or the data structure/set of rules that is the machine learning model, is trained by a machine learning algorithm.

For example, the machine learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receive input values, hidden nodes that are (only) connected to other nodes, and output nodes that provide output values. Each node may represent an artificial neuron. Each edge may transmit information, from one node to another. The output of a node may be defined as a (nonlinear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input. In at least some embodiments, the machine learning model may be a deep neural network, e.g. a neural network comprising one or more layers of hidden nodes (i.e. hidden layers), preferably a plurality of layers of hidden nodes.

Alternatively, the machine learning model may be a support vector machine. Support vector machines (i.e. support vector networks) are supervised learning models with associated learning algorithms that may be used to analyze data, e.g. in classification or regression analysis. Support vector machines may be trained by providing an input with a plurality of training input values that belong to one of two categories. The support vector machine may be trained to assign a new input value to one of the two categories. Alternatively, the machine learning model may be a Bayesian network, which is a probabilistic directed acyclic graphical model. A Bayesian network may represent a set of random variables and their conditional dependencies using a directed acyclic graph. Alternatively, the machine learning model may be based on a genetic algorithm, which is a search algorithm and heuristic technique that mimics the process of natural selection.

The interface 12 may correspond to one or more inputs and/or outputs for receiving and/or transmitting information, which may be in digital (bit) values according to a specified code, within a module, between modules or between modules of different entities. For example, the interface 12 may comprise interface circuitry configured to receive and/or transmit information.

In embodiments the one or more processors 14 may be implemented using one or more processing units, one or more processing devices, any means for processing, such as a processor, a computer or a programmable hardware component being operable with accordingly adapted software. In other words, the described function of the one or more processors 14 may as well be implemented in software, which is then executed on one or more programmable hardware components. Such hardware components may comprise a general-purpose processor, a Digital Signal Processor (DSP), a micro-controller, etc.

In at least some embodiments, the one or more storage devices 16 may comprise at least one element of the group of a computer readable storage medium, such as a magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

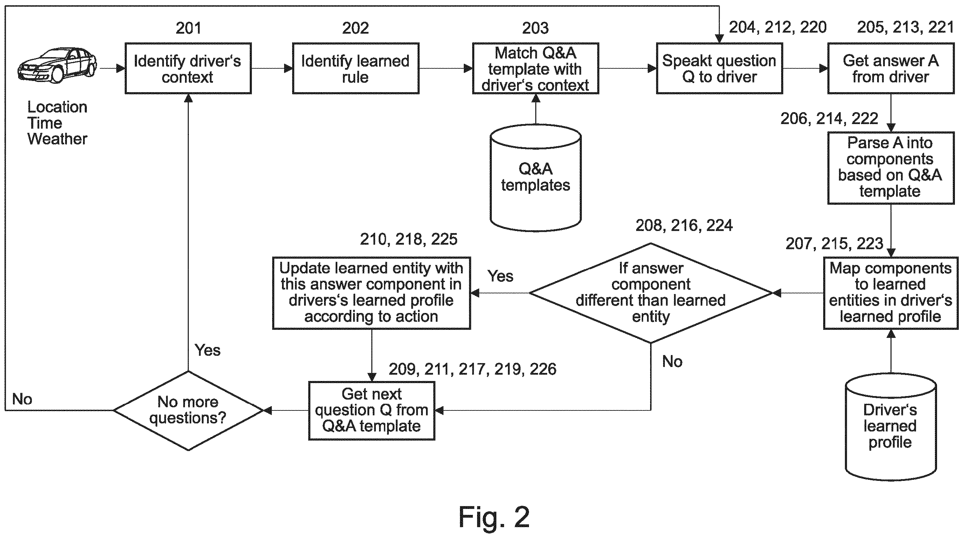

More details and aspects of the system, method, computer program or vehicle are mentioned in connection with the proposed concept or one or more examples described above or below (e.g. Fig. 2 to 3). The system, method, computer program or vehicle may comprise one or more additional optional features corresponding to one or more aspects of the proposed concept or one or more examples described above or below.

Various embodiments relate to a contextual dialogue for assisting the intelligent personal assistant in automotive. Various embodiments of the present disclosure may relate to one or more of user profiling, personalization, an intelligent personal assistant, Q&A (Question and Answer), dialogue conversation, and assistive machine learning.

Various machine learning algorithms are used to learn a driver's behavior and profile, e.g. to learn a driver's home and where and when their next trip is predicted. However, due to concerns related to user experience, there may be a desire for a good confidence that the learning is correct, so it often takes some time until suggestions show up for a user, e.g. longer time than what the user had expected. Vehicle manufacturers are now beginning to incorporate intelligent personal assistants into the vehicles, e.g. for voice conversation and natural language understanding, so various examples may leverage these abilities, and provide a voice dialogue with Q&A to provide feedback from the user if the learning is correct, then use that feedback to correct the learned entity (that came from machine learning). In the context of the present disclosure, this concept is called assistive machine learning. If the patterns of the driver can be learned much earlier with assistance from Q&A by the driver, then the driver profile can be learned faster, and services can be provided faster depending on context, which may improve the user experience.

To avoid interrupting the driver while driving, the relevant Q&A may be provided to the driver depending on the context that the driver is in, hence embodiments of the present disclosure may provide a contextual Q&A dialogue system. Such a system may help to solve the cold start problem, where in machine learning, data on the user to learn from might initially not exist. Embodiments may provide a novel system and framework for predicting what type of Q&A dialogue to provide to the driver based on the context that the driver is in, parse and understand the answers that the driver provides over voice, and how those answers can be used to update the driver's profile and correct the incorrect learning entities in the car, thus providing a proactive and interactive high-quality user experience.

Various embodiments of the present disclosure address the following desire. Given the learned driver profile from machine learning or no driver profile (in case of a new driver in the car), embodiments may provide a concept for predicting what type of feedback in the form of voice Q&A to provide to the driver, what is the context to trigger that feedback, and how to take the answers to improve the driver profile. Embodiments may provide a novel system and framework for predicting what type of Q&A dialogue to provide to the driver based on the context that the driver is in, parse and understand the answers that the driver provides over voice, and how those answers can be used to update the driver's profile and correct the incorrect learning entities in the car, thus providing a proactive and interactive high-quality user experience.

Embodiments may provide a system and framework that
1) has a database of Q&A dialogue templates (i.e. user interaction templates) that is developed based on driver's context collected in advance,
2) identifies the current driver's context,
3) matches the appropriate Q&A template with the current driver's context (contextual Q&A),
4) sends the Q&A dialogue to the driver (via the user interface),
5) gets the answer (i.e. the response) from the driver,
6) parses the driver's answer into identifiable components (using natural language processing) and determines if they can be mapped to learned entities in the learned driver's profile, and
7) updates the learned driver's profile (by adjusting the at least one data item and/or the confidence level of the pattern).

Machine learning aims to learn personalized behavior and settings for a driver in a vehicle, however the learned results (e.g. the locations for Home and Work) may not be correct, thus providing a bad user experience. In addition, learned results such as Home and Work may take a period of time before the machine learning system is confident of the learned result.

If available, the driver may provide feedback visually through the app or on the vehicle display, but this may be cumbersome and disruptive to the user experience. It also may be desirable if the driver can assist in the machine learning process by providing the feedback (e.g. if driver is just getting into the car but the machine learning system still doesn't know if the driver is at home, the vehicle could say "Are you currently at home?" If the answer is "yes", then the location is tagged with Home).

The collection of such feedback might desire not to constantly bother the driver with questions for every context, therefore embodiments may create a relevant dialogue that may provide appropriate answers for updating the learned results in the driver's profile. Voice dialogue can be used to ask the driver to correct low confidence learned results (which may be results that the machine learning system learned but is not confident due to few occurrences), based on the driving and personal context in the vehicle, and the driver can provide the correction back to the system to update the learned results, thus creating a responsive, intelligent and intuitive user experience

On the technology side, embodiments may leverage a spoken dialogue system (i.e. a voice-based user interface) for providing the parsing of voice language input and output of voice.

Various embodiments may leverage a contextual Q&A system for providing intelligent and relevant questions based upon driving, personal and learned context. Embodiments may allow the driver to respond to a question using voice (i.e. via the voice-based user interface) and if needed, update the learned context from the parsed voice response and update the user profile. Embodiments may thus provide a contextual voice Q&A framework for accelerating and improving the machine learning process based on user dialogue feedback. This framework may be applied to an intelligent personal assistant, e.g. in a vehicular context.

Embodiment may be built around an If-This-Then-That framework, i.e. a framework, where a condition (in this case, a context) triggers an action (a question being asked). The If-This-Then-That framework may be used to determine what action to take (i.e. what kind of Q&A dialogue to provide to the driver to update a specific learned entity) given the driving context. For example
- IF <context> THEN <action>
For example: IF <context="trip start"> THEN <action="invoke Q&A dialogue for trip location"> (In other words: If the context is the start of a trip, then the action is to "invoke [a] Q&A dialogue for trip location). For example, the Q&A dialogue may comprise the information on the at least one data item and the response of the user.

To achieve this, embodiments may address the following aspects:
- Defining the If-This-Then-That rule, which may be straightforward in a rule-based scenario
- Context detection.
For example, one or more of the following context indicators may be used to determine the context:
- departure (by detecting an event from vehicle data, seat sensor, engine start, door open etc.),
- arrival (by detecting an end of a trip, parking gear, last state call etc.),
- a pre-defined number of minutes before departure (e.g. by predicting a trip based on the learning from a user's travel history),
- a pre-defined number of minutes before arrival (e.g. based on the distance or time to the destination in the navigation),
- a speed (e.g. based on the driving speed and road speed limit), traffic may be used as a context (e.g. based on the (average) driving speed and road speed limit), and
- driving on the highway (e.g. by detecting the road info from an online map and matching it to the current location).

Actions may be the selection of a Q&A template to use for initiating dialogue to the driver for assistive machine learning to get the answer to update the learned entity with lowest confidence, and/or to choose the learned entity with lowest confidence, because it may be desired to have the driver to update the machine learning system where it is not sure of whether the learned entity is good and reliable so better learned results can be obtained faster.

One of the actions is the selection of a dialogue. The user has a multi-faceted behavior about destination, trip, route, interior control, communication, etc. The dialogue can be built to learn and enhance each of the user behaviors. The user behavior may be generally defined as taking a certain action on a certain content in the given context, e.g. drive to the destination for a given date, time, location, etc., or purchase an item for a given date, time, location and other context or desire. In this example, "drive" may be the action, "destination" the content and "date, time, location" the context.

The user interaction can be defined in the following formal terms. An interaction record (e.g. of a user interaction template) may be defined as an item in the interaction set / = {*I*₁, *I*₂, ..., *I_{Q}*}, where *I*ₙ(1 ≤ *n* ≤ *Q)* denotes a kind of user interaction such as departure arrival, preconditioning, etc. Content *O* may be formally defined as a set of items that user interaction is applied on, let *O* = {*O*₁, *O*₂, *..., O_{K}*} where *Oₙ* (1≤ *n* ≤ *K*) represents a content such as an item. Given a contextual feature, set F *=* {*f*₁, *f*₂,..., *f*ₚ}, a context *Cᵢ* may be defined as a group of contextual feature-value pairs, i.e. *Cᵢ* = {(*x*₁:*v*₁), (*x*₂:*v*₂), ..., (*x_{L}*:*v*_{L})}, where *xⱼ* ∈ *F* and *vₙ* is the value for *xₙ*(1 ≤ *n* ≤ *L*)*.* A user behavior *rᵢ* = *< Iᵢ*, *Oᵢ*, *Cᵢ*, Confidence > may comprise or be composed of a user interaction from interaction, content and context denoted as *I*, *O* and *C*. For the dialogue, the template for the user behavior may be selected based on the matched context C having the lowest confidence, e.g. to maximize the learning gain.
Dialogue =< Template, Vocabulary (*O*), *C* >
For example template="Are you at <vocab>", context="trip start", O=POI("lat/lon"), with vocab being an entry in the vocabulary, POI being a Point of Interest, and lat/lon being the latitude and longitudinal coordinates.

Fig. 2 shows a schematic diagram of a high-level flow of the proposed approach according to various embodiments. At 201, the driver's context is identified, e.g. based on the location, the time and/or the weather. At 202, the learned rule is identified. At 203, a Q&A template from a database or data storage of Q&A templates is matched with a driver's context. At 204, a question Q (e.g. the information on the at least one data item) is output (i.e. spoken) to the driver. At 205, an answer A (e.g. the response) is obtained from the driver. At 206, the answer A is parsed into components (e.g. using natural language processing) based on the Q&A template. At 207, the components are mapped to learned entities (i.e. data items) in the driver's learned profile (which is also stored in a database/data storage). At 208, a determination may be performed on whether the answer component is different from the learned entity. If yes, at 210 the learned entity may be updated with this answer component in the driver's learned profile according to the action. Once this is done, or if the answer component is not different from the learned entity, at 209, the next question Q may be selected from the Q&A template. If there are no more questions, the flow returns to 201, if there are more questions, at 212, which corresponds to 204, the next question may be spoken to the driver, and the process may be repeated from there (213-226) until no more questions are left.

Fig. 3 shows a table of a mapping between a user-learned profile and a Q&A template. The table has eight columns: A source location column (e.g. containing the source location of a predicted trip or location, in lat/long coordinates), a destination location column (e.g. containing the destination location of a predicted trip, in lat/long coordinates), a departure time column (e.g. containing the departure time of a predicted trip), an arrival time column (e.g. containing the arrival time of a predicted trip), a learned temperature column (e.g. containing a temperature range of a preconditioning rule), a learned rule column (denoting the learned rule, e.g. "predicted trip", "home", "preconditioning" or "work"), a confidence column (e.g. containing a confidence value between 0 and 1) and a Q&A template column (denoting the Q&A template to be used for verifying the predicted pattern, e.g. "predicted trip", "home learning", "preconditioning" or "work learning"). In Fig. 3, the Q&A template chosen from 202 of Fig. 2 (Identify learned rule) may be determined based on matching the learned rule given the context and its lowest confidence score (denoting the uncertainty of the learned result). For example, if the car is currently at a certain location that is close enough to Home (45.67, -86.89) and the time is near 8:00 AM, then from the above matched context, the learned rule is "predicted trip", but this is far from sure because of its lowest confidence score (0.15). Therefore, the "predicted trip" Q&A template may be invoked.

In the following, an exemplary "predicted trip" Q&A template is introduced. The purpose of the template may be to provide driver feedback to confirm whether the trip the driver is about to take is a predicted trip or not, so the system can correct the predicted trip and the learned destination. Inputs (context indicators) may be the car location, time and current weather.

The following procedure may be adhered to (the numbers relate to the numbers in Fig. 2, where the first step corresponds to 201 in Fig. 2, the second step corresponds to 202 etc.):
1) Identify driver's context: Getting the car location and time and the driver is in the car, driver's context is "about to leave for a trip".
2) Identify learned rule: Given the time and car location, system can determine if this upcoming trip is potentially a predicted trip, and whether the predicted trip has the lowest confidence. If so, then the learned rule may be "predicted trip". The actual creation of the learned rule can be done using machine learning, e.g. as described in relation with WO 2019 214799 A1.
3) Match Q&A template with driver's context. Knowing that this is potentially a predicted trip, the Q&A template for "predicted trip" (see Fig. 3) may be selected and triggered (as shown in the following). The template may be parsed (list of Questions, Answers and Actions), to find out the first question.
4) Speak question Q to the driver: For example, via a voice-based user interface, the first question may be spoken: "Are you at <A> going to <B>?" where <A> refers to the predicted departure location and <B> is the predicted arrival location from the driver's learned profile.
5) Get answer A from the driver. For example, the driver may say "I am at <placel>".
6) Parse answer A into components based on the Q&A template. For example, using Natural Language Processing (NLP), the answer A may be parsed to find the place entity <placel>.
7) Map components to learned entities in the driver's learned profile. In other words, the component may be mapped to the appropriate action according to the Predicted Trip Q&A template. In this case, <placel> refers to the departure location.
8) If the answer component is different from the learned entity, i.e. if <placel> is not <A>, then the process may continue with step 10, else with step 9.
9) Get next question Q from Q&A template. For example, the next question may be "Are you going to <B>?" where <B> is the predicted arrival location obtained from driver's learned profile, then the process may continue with step 12.
10) Update learned entity with this answer component in the driver's learned profile according to the action. For example, the learned departure location may be recorded as <placel> for this trip.
11) Get next question Q from Q&A template. For example, the next question may be: "Are you going to <B>?" where B is the predicted arrival location obtained from the driver's learned profile.
12) Speak question Q to driver. For example, the question may be spoken: "Are you going to <B>?" where <B> is the predicted arrival location obtained from the driver's learned profile.
13) Get answer A from driver: For example, the answer may be "No, I am going to <place2>", or the answer may be "Yes".
14) Parse A into components based on Q&A template. For example, using NLP, the answer A may be parsed to find the place entity <place2>.
15) Map components to learned entities in driver's learned profile. The component may be mapped to the appropriate action according to the "Predicted Trip" Q&A template. <place2> may refer to the arrival location.
16) If the answer component is different from the learned entity, e.g. If <place2> is not <B>, then the process may continue with step 18, else with step 17.
17) Get next question Q from Q&A template. For example, the next question may be "Is this a trip that you usually take at this time?". Then the process may continue with step 20.
18) Update learned entity with this answer component in the driver's learned profile according to action. For example, in this case, the arrival location may be recorded as <place2> for this trip.
19) Get next question Q from Q&A template. For example, the next question may be "Is this a trip that you usually take at this time?"
20) Speak question Q to driver. For example, the question may be spoken: "Is this a trip that you usually take at this time?"
21) Get answer A from driver. For example, the answer may be "Yes" or "No"
22) Parse A into components based on Q&A template. In this case, there are no components to parse, the action may be retrieved based on the response.
23)Map components to learned entities in the driver's learned profile. Again, in this case, there are no components to map.
24) If answer component is different from the learned entity. Again, there is no answer component, just Yes or No.
25) Update learned entity with this answer component in the driver's learned profile according to action. If the answer is "Yes", then the predicted trip may be updated with the predicted departure = <placel> and predicted arrival = <place2>, then the procedure may wait for the next driver's context. If the answer is "No", then this trip may be marked as a not predicted trip, then the procedure may wait for the next driver's context.
26) Get next question Q from Q&A template. In this case, there are no more questions, so the procedure may return to identify the driver's context.

In the following, the "predicted trip" Q&A template is shown:
Q: Are you at <A> going to <B>?
A: I am at <placel>
If <placel> <> <A>, then the action may be to record the trip departure location (latitude, longitude) and label the trip departure location as <placel>.
Q: Are you going to <B>?
A: I am going to <place2> OR A: Yes
Action: None
Q: Is this a trip that you usually take at this time?
A: Yes OR No
If A = Yes, then this is a predicted trip, so the action may be to update the predicted departure label to <placel> and the predicted arrival label to <place2>. If A = No, then this is not a predicted trip and the action may be to mark the trip as not being a predicted trip.

At the end of the trip, after recording the trip arrival location (latitude, longitude), the trip arrival location label may be recorded as <place2>.

In the following, the template of another use case is introduced that deals with "smart preconditioning", e.g. preparing the vehicle for an upcoming trip, e.g. by pre-heating the vehicle in cold weather or cooling down the vehicle in hot weather. The purpose of the template may be to provide driver feedback to confirm whether the smart preconditioning notification to start preconditioning before the next trip is correct so the temperature conditions can be adjusted accordingly. Again, the car location, time and current weather (i.e. outdoor temperature) may be used as input.

The following procedure may be adhered to (the numbers relate to the numbers in Fig. 2, where the first step corresponds to 201 in Fig. 2, the second step corresponds to 202 etc.)
1) Identify driver's context: Getting the car location, time, current weather and smart preconditioning notification, in this case, the driver's context is "smart preconditioning for next trip"
2) Identify learned rule: Given the time and car location, the system can determine if this upcoming trip is a predicted trip. Given the current weather and driver profile for preconditioning, the system can learn that this learned rule is "smart preconditioning for next trip". The actual creation of the learned rule can be done using machine learning, e.g. as shown in WO 2019 214799 A1.
3) Match Q&A template with driver's context. Knowing that the context is "smart preconditioning for next trip" (e.g. if the context indicators "car location", "time" and "current temperature" match the context for smart preconditioning), find the Q&A template for smart preconditioning (see Fig. 3) and trigger/start running it. The "Smart Preconditioning" Q&A template will be shown in the following. The template may be parsed (list of Questions, Answers and Actions), and the first question may be identified.
4) Speak question Q to the driver. For example, the following question may be spoken: "Would you like me to <heat/cool> your car before you leave?" where <heat/cool> is determined based on the action to take which is dependent upon the weather conditions matching the driver's learned profile for smart preconditioning.
5) Get answer A from driver. For example, the driver may say "Yes, <heat/cool> the car." OR the driver may say "No".
6) Parse A into components based on the Q&A template. Using NLP, the answer may be parsed to find the action entity <heat/cool>.
7) Map components to learned entities in the driver's learned profile. The procedure may map the component to the appropriate action according to the "Smart Preconditioning" Q&A template. If the driver says "Yes", then <heat/cool> refers to remotely turning on the heater or turning on the air conditioning in the car. If the answer is "yes", then Preconditioning may be set to "Yes", which means that this is a positive confirmation of the predicted smart preconditioning, and there are no more questions, so the procedure may return and wait for the next driver's context.
8) If the answer component is different from the learned entity, in this case, there is no answer component, just "Yes" or "No". If driver says "No", then the procedure may continue with step 9 to determine whether this is an ad-hoc time/occurrence to not do preconditioning for this time, or actually never do preconditioning for this driving context.
9) Get next question Q from Q&A template: If the driver says "No", then the next question can be selected: "The outdoor temperature is <outdoor_temp>. Do you want me to precondition your car for this temperature in the future?" where <out-door_temp> is the current outdoor temperature. Then the procedure can continue with step 12.
12) Speak question Q to driver: "The outdoor temperature is <outdoor_temp>. Do you want me to precondition your car for this temperature in the future?".
13) Get answer A from driver. For example, the answer may be "Yes" OR "No".
14) Parse A into components based on Q&A template. "Yes" or "No" refer to Boolean actions.
15) Map components to learned entities in driver's learned profile. If A = "Yes", then the procedure might not need to change any learned entities for the outdoor temperature. Since there are no more questions, the procedure may wait for the next driver's context.
16) If the answer component is different than the learned entity, e.g. if A = "No", then the procedure may remove <outdoor_temp> from the smart preconditioning rule for the driver's learned profile, set Preconditioning to "No" and mark this trip as "not being preconditioned". The procedure may update the learned entity.
17) Update learned entity with this answer component in driver's learned profile according to action. For this smart preconditioning rule, this <outdoor_temp> may be removed from the list of outdoor temperatures in the driver's learned profile. No more questions may remain, so the procedure waits for the next driver's context.

In the following, the "Smart Preconditioning" Q&A template is shown:
Q: Would you like me to <heat/cool> your car before you leave?
A: Yes, <heat/cool> the car. OR No
If A = "Yes", then the action may be to set Preconditioning = Yes, and end the questions. If A = "No", then the action may be to go to the next question Q below.

Q: The outdoor temperature is <outdoor_temp>. Do you want me to precondition your car for this temperature in the future?
If A is "Yes", then the action may be to set Preconditioning = Yes, and mark this trip as "no preconditioning". If A is "No", then the action may be to remove <outdoor_temp> from the outdoor temperature list for preconditioning, to set Preconditioning = No and to mark this trip as "no preconditioning".

Embodiments may provide a technical framework with a novel system and framework for providing user feedback to assist in improving the accuracy of the machine learned user behavior in the driver's learned profile. Embodiments may use a human-centric smart dialogue system for facilitating driver feedback and conversation in a personal and intuitive manner, by asking relevant questions to the user that the user is able to answer, and the system can be easily updated. Embodiments may improve user experience by being able to proactively and quickly catch incorrect machine learning results before they are delivered and shown to the driver in the car, as well as balancing between the relevancy of question and interruption (that is, embodiments may refrain from always questioning the user if the answer is highly probable because it becomes interruptive). Embodiments may provide a balance between natural needs of natural language generation (NLG) and context-aware flexibility.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computerexecutable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A system (10) for verifying patterns learned from data and generated by one or more machine learning models being used in a vehicle (100), the system comprising one or more processors (14) and one or more storage devices (16), wherein the system is configured to:
obtain information on one or more patterns being generated by the one or more machine learning models, each of the one or more patterns comprising one or more data items and information about a confidence level of the pattern;
determine a context that a user of the vehicle is in in relation to the vehicle, based on one or more context indicators, the one or more context indicators comprising at least one of a current time and a location of the user or vehicle;
select at least one of the one or more data items of one of the one or more patterns based on the confidence level of the pattern and based on the context of the user;
provide information on the at least one data item to the user via a user interface (20), the information on the at least one data item requesting the user to provide feedback on the at least one data item; and
adjust the at least one data item or the confidence level of the pattern based on the response of the user, by processing the response of the user via the user interface using natural language processing.

2. The system according to claim 1, wherein the system is configured to trigger providing the information on the at least one data item to the user based on the determined context.

3. The system according to one of the claims 1 or 2, wherein the one or more patterns of the one or more machine learning models relate to usage patterns of the vehicle by the user.

4. The system according to one of the claims 1 to 3, wherein the one or more data items relate to one of more of a designation of a location, a starting location of a trip, a destination of a trip, a regularity of a trip, a setting of the vehicle, a temperature control setting of the vehicle, and an air conditioning setting of the vehicle.

5. The system according to one of the claims 1 to 4, wherein the system is configured to generate the one or more patterns using the one or more machine learning models, and to re-train the one or more machine learning models based on the adjusted at least one data item or the confidence level of the pattern.

6. The system according to one of the claims 1 to 5, wherein the one or more context indicators comprise at least one of a current time, a location of the user or vehicle, a velocity of the vehicle, a map of an environment of the vehicle, and the weather.

7. The system according to one of the claims 1 to 6, wherein the selected pattern relates to a location, wherein the system is configured to ask the user about the designation of the location, by providing information on a predicted designation of the location or by asking the user to provide the designation of the location.

8. The system according to one of the claims 1 to 7, wherein the selected pattern relates to a trip, wherein the system is configured to ask the user to confirm or provide a starting location and/or a destination of the trip, and/or to indicate whether the trip is a regular trip.

9. The system according to one of the claims 1 to 8, wherein the selected pattern relates to a setting of the vehicle, wherein the system is configured to ask the user whether the predicted setting is appropriate in the determined context.

10. The system according to one of the claims 1 to 9, wherein the user interface is a voice-based user interface, and/or wherein the system is configured to use a user interaction template to provide the information on the at least one data item to the user, the user interaction template being based on a type of the at least one data item.

11. The system according to one of the claims 1 to 10, wherein the system is configured to select the at least one data item such, that patterns having a lower confidence level are preferred over patterns having a higher confidence level.

12. The system according to one of the claims 1 to 11, wherein the information on the at least one data item comprises one or more of a textual representation of the at least one data item and a question related to the at least one data item.

13. A vehicle (100) comprising the system (10) according to one of the claims 1 to 12.

14. A method for verifying patterns learned from data and generated by one or more machine learning models being used in a vehicle, the method comprising:
obtaining (110) information on one or more patterns being generated by the one or more machine learning models, each of the one or more patterns comprising one or more data items and information about a confidence level of the pattern;
determining (120) a context that a user of the vehicle is in in relation to the vehicle, based on one or more context indicators comprising at least one of a current time and a location of the user or vehicle;
selecting (130) at least one of the one or more data items of one of the one or more patterns based on the confidence level of the pattern and based on the context of the user;
providing (140) information on the at least one data item to the user via a user interface, the information on the at least one data item requesting the user to provide feedback on the at least one data item;
adjusting (150) the at least one data item or the confidence level of the pattern based on the response of the user, by processing the response of the user via the user interface using natural language processing.

15. A computer program product comprising a computer readable medium having computer readable program code embodied therein, the computer readable program code being configured to implement the method of claim 14, when being loaded on a computer, a processor, or a programmable hardware component.
